# EUROPÄISCHE PATENTSCHRIFT

(11) **EP 1 996 834 B1**
(45) Veröffentlichungstag und Bekanntmachung des Hinweises auf die Patenterteilung: **25.11.2009**
(21) Anmeldenummer: 07726746.6
(22) Anmeldetag: 09.03.2007
(51) Int. Cl.: F16H 3/54

(54) **ZWEISTUFIGES WERKZEUGMASCHINENGETRIEBEANORDNUNG, INSBESONDERE SPINDELGETRIEBE**
TWO-STAGE MACHINE TOOL GEARING, IN PARTICULAR SPINDLE GEARING
BOITE DE VITESSE A DEUX ETAGES POUR UNE MACHINE-OUTIL, EN PARTICULIER TRANSMISSION A BROCHE

(30) Priorität: 21.03.2006 DE 102006012837
(43) Veröffentlichungstag der Anmeldung: 03.12.2008
(73) Patentinhaber: ZF Friedrichshafen AG, 88038 Friedrichshafen (DE)
(72) Erfinder: ECKERT, Harald, 88074 Meckenbeuren (DE)
(86) Internationale Anmeldenummer: PCT/EP2007/052224
(87) Internationale Veröffentlichungsnummer: WO 2007/107460

(56) Entgegenhaltungen:
- EP-A1- 0 566 926
- WO-A-86/07423
- WO-A-2004/023004
- DE-A1- 2 145 009
- DE-A1-102004 003 684
- DE-A1-102004 003 685
- US-A- 3 382 736

## Beschreibung

Die vorliegende Erfindung betrifft eine zweistufige Werkzeugmaschinengetriebeanordnung, insbesondere für Anordnungen mit Spindelgetriebe für hohe Drehmomente und hohe Drehzahlen, gemäß dem Oberbegriff des Patentanspruchs 1.

Werkzeugmaschinengetriebe, insbesondere Spindelgetriebe, sind aus dem Stand der Technik bekannt und umfassen üblicherweise ein Planetengetriebe sowie eine Schalteinrichtung zum Schalten der gewünschten Gangstufe.

Beispielsweise beschreibt die DE 10 2004 003 684 A1 der Anmelderin ein Werkzeugmaschinengetriebe, insbesondere ein Spindelgetriebe, bei dem die Kraft- bzw. Momentenübertragung von der Abtriebswelle des Getriebes auf die Spindel direkt erfolgt, wobei die Spindel koaxial zur Abtriebswelle angeordnet ist.

Ferner ist aus der DE 10 2004 003 685 A1 der Anmelderin ein gattungsgemäßes Werkzeugmaschinengetriebe, insbesondere ein Spindelgetriebe bekannt, bei dem die Kraft- bzw. Momentenübertragung von der Abtriebswelle des Getriebes auf die Spindel direkt erfolgt, wobei die Spindel koaxial zur Abtriebswelle angeordnet ist. Dabei ist in die Antriebswelle eine Drehdurchführung integriert, die als Übergabeeinrichtung für Kühlflüssigkeiten, Öle oder Luft zwischen Getriebeabtrieb und Spindel dient.

Die DE 102 41 006 A1 der Anmelderin beschreibt eine elektromagnetische Schalteinrichtung eines zweistufigen Planetengetriebes mit einer Antriebswelle und einer Abtriebswelle, einem Sonnenrad, einem Hohlrad, einem Planetenträger mit Planetenrädern, einem Getriebegehäuse sowie einer Schiebemuffe zur Schaltung eines ersten Ganges, bei welchem das Hohlrad mit dem Gehäuse koppelbar, und eines zweiten Ganges, bei welchem das Hohlrad mit dem Sonnenrad koppelbar ist, wobei die Schiebemuffe mittels eines Elektromagneten, bestehend aus Magnetspulen und einem Anker, verschiebbar ist. Dabei ist der Anker drehbar, jedoch axial fixiert auf der Schiebemuffe angeordnet.

Aus der DE 199 17 673 A1 der Anmelderin geht eine Schalteinrichtung eines zweistufigen Planetengetriebes hervor. Bei dem bekannten Planetengetriebe ist die Antriebswelle mit einem Sonnenrad und die Abtriebswelle mit einem Planetenträger verbunden, wobei ein Hohlrad des Planetengetriebes über eine Schiebemuffe formschlüssig mit einem Getriebegehäuse oder dem Sonnenrad koppelbar ist und die Schiebemuffe koaxial zur Antriebswelle mittels eines elektrischen Stellglieds in die verschiedenen Schaltpositionen verschiebbar ist. Das Stellglied ist dabei ein Elektromagnet, dessen Anker triebmäßig mit der Schiebemuffe verbunden ist.

Werkzeugmaschinengetriebe mit platzsparendem Planetentrieb zur Drehmomentsteigerung sind durch ihre zentrische Bauweise generell auch für hohe Drehzahlen geeignet. Jedoch beschränken die aus dem Stand der Technik bekannten Konstruktionen die hohen Drehzahlen, da im Direktgang (i=1:1, Motorabtriebsdrehzahl = Getriebeabtriebsdrehzahl) der komplette Planetentrieb mit Sonnenrad, Planetenrädern, Planetenträger und Hohlrad angetrieben wird, obwohl dieser nur für die Realisierung einer Übersetzung für die erste Gangstufe benötigt wird. Durch die hohen Rotationsmassen werden bei derartigen Situationen die Schwingwerte nachteilig beeinflusst. Zudem verlängern sich die Beschleunigungszeiten bis zur Maximaldrehzahl.

Zum Übertragen von hohen Drehmomenten in der ersten Gangstufe (d.h. mit Übersetzung) sind am Abtrieb große Durchmesser erforderlich, die einerseits die Rotationsmassen zusätzlich vergrößern und zudem nur große Dichtdurchmesser erlauben. Dies wirkt sich nachteilig auf die Getriebetemperatur aus, da die Reibleistung mit Durchmesser und Drehzahl überproportional steigt.

Der vorliegenden Erfindung liegt die Aufgabe zugrunde, eine zweistufige Werkzeugmaschinengetriebeanordnung, insbesondere für Anordnungen mit Spindelgetriebe für hohe Drehmomente und hohe Drehzahlen anzugeben, welche geringe Schwingwerte aufweist. Des weiteren soll die Getriebetemperatur möglichst gering gehalten werden.

Diese Aufgabe wird durch die Merkmale des Patentanspruchs 1 gelöst. Weitere erfindungsgemäße Ausgestaltungen und Vorteile gehen aus den Unteransprüchen hervor.

In einer Werkzeugmaschine sind die Schwingwerte für die Oberfläche und die Temperaturen für die Genauigkeit der zu bearbeitenden Teile maßgeblich verantwortlich und damit entscheidend für die Qualität. Die Verwendung von Riemen bei hohen Drehzahlen ist technisch nicht realisierbar, da gesetzlich vorgeschriebene Geräuschemissionen nicht einzuhalten sind. Demnach ist bei der erfindungsgemäßen Getriebeanordnung vorgesehen, dass die Kraft- bzw. Momentenübertragung vom Getriebe auf die Spindel direkt erfolgt.

Demnach wird eine zweistufige Werkzeugmaschinengetriebeanordnung vorgeschlagen, umfassend einen Planetensatz, eine Antriebswelle, eine Spindel, eine erste Abtriebswelle, die drehfest mit der Antriebswelle verbunden ist und mit dem Sonnenrad des Planetensatzes über ein erstes Schaltelement lösbar verbindbar ist, und eine zweite Abtriebswelle, welche mit dem Steg des Planetensatzes drehfest verbunden ist, wobei ein zweites Schaltelement vorgesehen ist, welches eine lösbare Verbindung zwischen der Spindel und wahlweise der ersten oder der zweiten Abtriebswelle herstellt. Hierbei wird der Direktgang durch die Verbindung der ersten Abtriebswelle mit der Spindel bei geöffnetem ersten Schaltelement erzeugt; der eine Übersetzung aufweisende Gang wird durch Verbinden der Spindel mit der zweiten Abtriebswelle bei geschlossenem ersten Schaltelement realisiert.

Durch die erfindungsgemäße Konzeption wird gewährleistet, dass im Direktgang der Planetensatz abgekoppelt wird, so dass die Rotationsmassen erheblich reduziert und die Beschleunigungszeiten verkürzt werden.

Gemäß der Erfindung ist das Hohlrad des Planetensatzes drehfest mit dem Gehäuse des Getriebes verbunden, so dass es in der ersten Gangstufe (mit Übersetzung) nicht mit angetrieben wird, wodurch die Rotationsmassen reduziert werden und die Beschleunigungszeit bis zur Maximaldrehzahl verkürzt wird. Des weiteren ermöglicht die spielfreie Lage des Hohlrades ein präziseres Abrollen der Verzahnung und damit eine höhere Laufruhe in der ersten Gangstufe (mit Übersetzung).

Gemäß der Erfindung kann eine Sperrvorrichtung vorgesehen sein, welche das Mitdrehen der zweiten Abtriebswelle im Direktgang verhindert. Dadurch wird der Wirkungsgrad des Getriebes verbessert, da die Lagerung der zweiten Abtriebswelle ein Schleppmoment aufbauen kann. Zu diesem Zweck wird im Rahmen einer vorteilhaften Ausführungsform ein Federstift in eine Bohrung des Planetenträgers geführt, wodurch der Planetenträger blockiert wird. Die Betätigung des Federstiftes erfolgt über Betätigung des ersten Schaltelementes oder des zweiten Schaltelementes.

Im Rahmen einer vorteilhaften Weiterbildung der Erfindung ist vorgesehen, dass die Spindel koaxial zur ersten Abtriebswelle angeordnet ist. Ferner ist die zweite Abtriebswelle als koaxial zur ersten Abtriebswelle ausgeführte Hohlwelle ausgebildet, wobei die erste Abtriebswelle spielfrei in der zweiten Abtriebswelle gelagert ist.
Die Schaltelemente können als Klauen- oder Reibflächenkupplungen oder als Synchronisierungen ausgeführt sein und elektrisch, mechanisch, elektromechanisch, hydraulisch, pneumatisch und/oder mit Federkraft betätigbar sein.

Vorzugsweise ist das erste antriebsseitig angeordnete Schaltelement in das Getriebe integriert und beinhaltet eine Dichtstelle. Das zweite Schaltelement ist abtriebsseitig außerhalb des Getriebes angeordnet. Gemäß einer vorteilhaften Weiterbildung kann die Spindel bzw. ein Spindeleinsatz als Träger für das zweite Schaltelement dienen.

In vorteilhafter Weise kann in das erfindungsgemäße Getriebe eine Drehdurchführung integriert sein, die als Übergabeeinrichtung für Kühlflüssigkeiten, Öle oder Luft zwischen Getriebeabtrieb und Spindel dient. Ein Ölstand ist damit nicht mehr erforderlich, so dass keine Pantschverluste mehr auftreten, welche das Getriebe erwärmen würden. Die Drehdurchführung kann, wie in der DE 10 2004 003 685 A1 der Anmelderin beschrieben, deren Offenbarungsgehalt vollinhaltlich auch Gegenstand dieser Beschreibung sein soll, in der ersten Abtriebswelle gelagert sein und zwei Dichtscheiben umfassen, welche als Dichtstelle und als Einrichtung zur Aufnahme von Differenzdrehzahlen dienen.

Des Weiteren wird ein zweistufiges Werkzeugmaschinengetriebe beansprucht, welches derart angepasst ist, dass es in einer Werkzeugmaschinenanordnung wie oben beschrieben verwendet werden kann.

Die Erfindung wird im Folgenden anhand der beigefügten Figuren beispielhaft näher erläutert. Es zeigen:
- Figur 1: eine schematische Ansicht einer Ausführungsform des erfindungsgemäßen Werkzeugmaschinengetriebes, bei dem der Direktgang geschaltet ist;
- Figur 2: eine schematische Ansicht eines Werkzeugmaschinengetriebes gemäß Figur 1, bei dem die Gangstufe mit Übersetzung geschaltet ist;
- Figur 3: eine Schnittansicht eines Werkzeugmaschinengetriebes gemäß Figur 1, bei der die sich in der ersten Gangstufe (mit Übersetzung) drehenden Teile schraffiert dargestellt sind;
- Figur 4: eine Schnittansicht eines Werkzeugmaschinengetriebes gemäß Figur 1, bei der die sich im Direktgang drehenden Teile schraffiert dargestellt sind; und
- Figuren 5: und 6 jeweils eine schematische Ansicht eines Werkzeugmaschinengetriebes gemäß der Erfindung mit geschalterer erster (unten) und zweiter Gangstufe (oben), wobei sich die Ausführungsformen durch die unterschiedliche Ausführung der Schaltelemente unterscheiden.

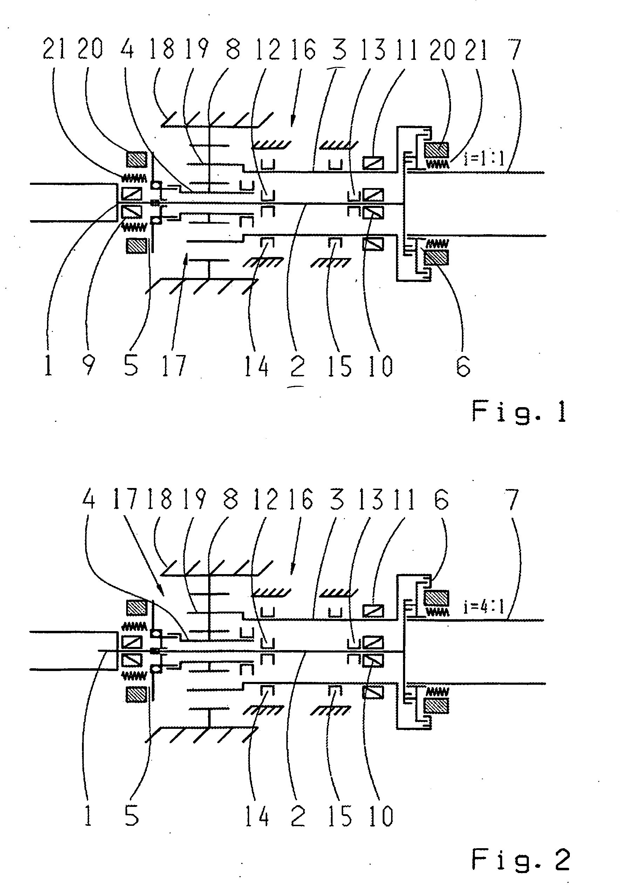

Bezugnehmend auf Figur 1 umfasst das erfindungsgemäße Werkzeugmaschinengetriebe 16 einen Planetensatz 17, eine Antriebswelle (Motorwelle) 1, eine erste Abtriebswelle 2, die drehtest mit der Antriebswelle 1 verbunden ist und mit dem Sonnenrad 4 des Planetensatzes 17 über ein erstes Schaltelement 5 lösbar verbindbar ist. Ferner ist eine zweite Abtriebswelle 3 vorgesehen, welche mit dem Steg 19 des Planetensatzes 17 drehfest verbunden ist, wobei ein zweites Schaltelement 6 vorgesehen ist, das eine lösbare Verbindung zwischen der Spindel 7 bzw. einem Spindeleinsatz und wahlweise der ersten oder der zweiten Abtriebswelle 2 bzw. 3 herstellt.

Der Direktgang (zweite Gangstufe) wird gemäß der Erfindung durch die Verbindung der ersten Abtriebswelle 2 mit der Spindel 7 über das zweite Schaltelement 6 bei geöffnetem ersten Schaltelement 5 erzeugt; der eine Übersetzung aufweisende Gang (erste Gangstufe) wird durch Verbinden der Spindel 7 mit der zweiten Abtriebswelle 3 über das zweite Schaltelement 6 bei geschlossenem ersten Schaltelement 5 realisiert.

Der Planetensatz wird durch das Sonnenrad 4 über das Schaltelement 5 zugeschaltet, wobei in diesem Fall eine Verbindung zur Abtriebswelle 2 erfolgt; das Hohlrad 8 ist permanent drehfest mit dem Gehäuse 18 verbunden.

Durch die innenliegende Abtriebswelle 2 werden im Direktgang hohe Drehzahlen auf die Spindel 7 übertragen. Die Abtriebswelle 2 weist einen kleinen Durchmesser auf, da im Direktgang weniger Drehmoment beansprucht wird, was in niedrigeren Umfangsgeschwindigkeiten und geringen Rotationsmassen resultiert. Aus diesem Grunde können bei der Abtriebswelle 2 für die hohen Drehzahlen antriebs- und abtriebsseitig Radialwellendichtringe 9, 10 mit kleinem Durchmesser verwendet werden. Über die außenliegende Antriebswelle 3 werden die hohen Drehmomente übertragen, wodurch die größere abtriebsseitige Dichtstelle 11 nur in Übersetzung und bei wesentlich niedrigeren Drehzahlen belastet wird.

Die Abtriebswelle 2 ist durch Schräg- bzw. Genauigkeitslager bzw. Spindellager 12,13 in der Abtriebswelle 3 spielfrei gelagert. Die Abtriebswelle 3 ist ebenso spielfrei mit Schräg- bzw. Genauigkeitslagern 14, 15 im Gehäuse 18 gelagert.

Bei dem in Figur 1 gezeigten Beispiel ist, umfassen die Schaltelemente 5 und 6 jeweils eine Spule 20 und eine Feder 21, so dass sie vorzugsweise durch die Betätigung der Spule gegen die Federkraft betätigt werden können.

In Figur 1 wird das erfindungsgemäße Werkzeugmaschinengetriebe 16 mit geschaltetem Direktgang gezeigt; hierbei ist das Schaltelement 5 offen und das Schaltelement 6 derart geschlossen, dass eine Verbindung zwischen der Abtriebswelle 2 und der Spindel bzw. dem Spindeleinsatz 7 hergestellt ist.

In Figur 2 wird das erfindungsgemäße Werkzeugmaschinengetriebe 16 mit geschalteter erster Gangstufe, d.h. mit Übersetzung gezeigt; hierbei ist das Schaltelement 5 geschlossen und das Schaltelement 6 derart geschlossen, dass eine Verbindung zwischen der Abtriebswelle 3 und der Spindel bzw. dem Spindeleinsatz 7 hergestellt ist.

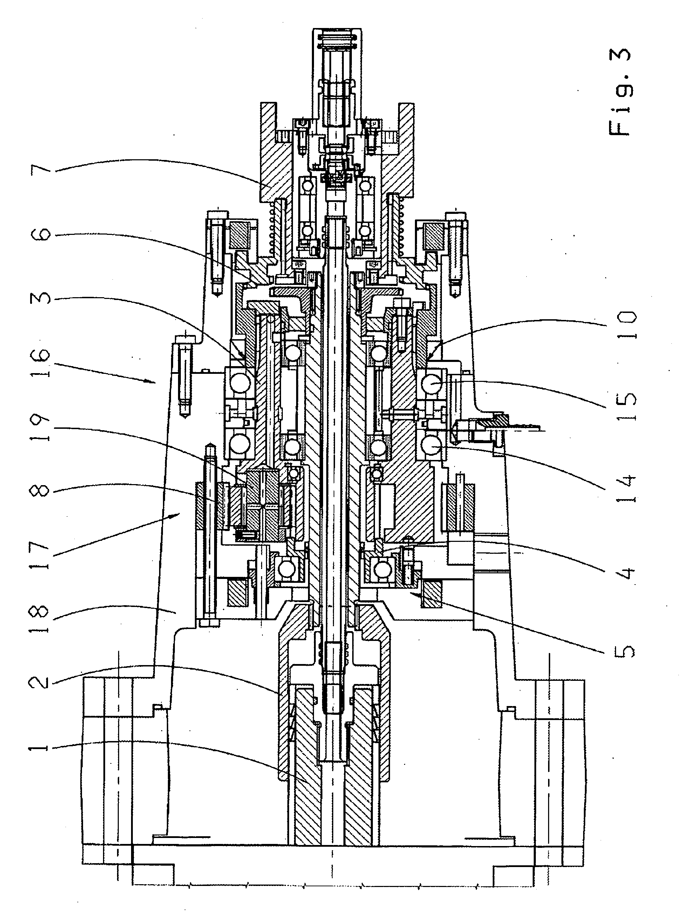

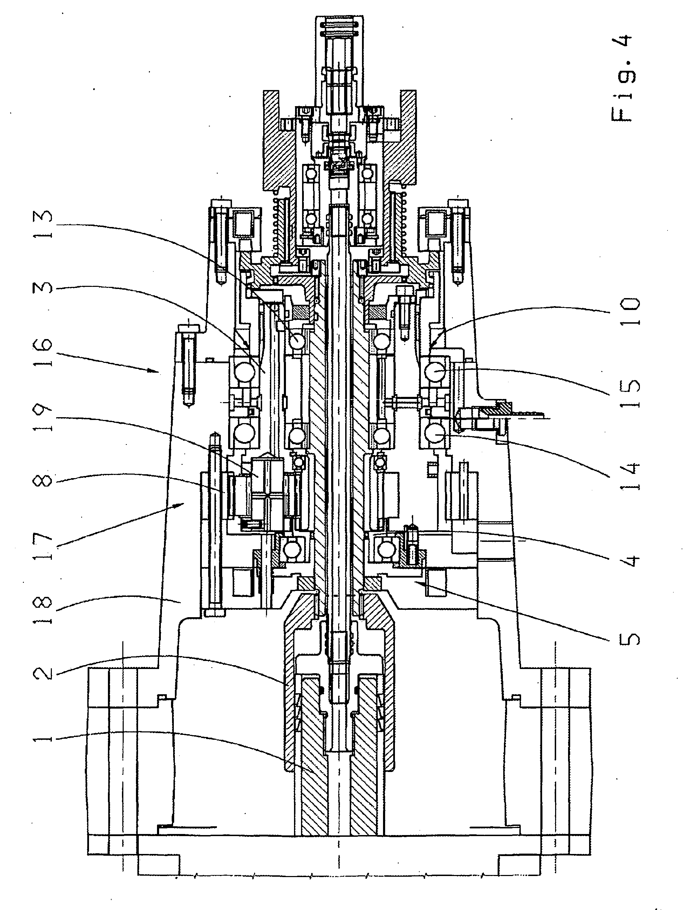

In Figur 3, die eine Schnittansicht des Werkzeugmaschinengetriebes 16 darstellt, werden die sich drehenden Teile bei geschalterer erster Gangstufe schraffiert dargestellt; Figur 4 zeigt, ebenfalls schraffiert dargestellt, die sich drehenden Teile im Direktgang.

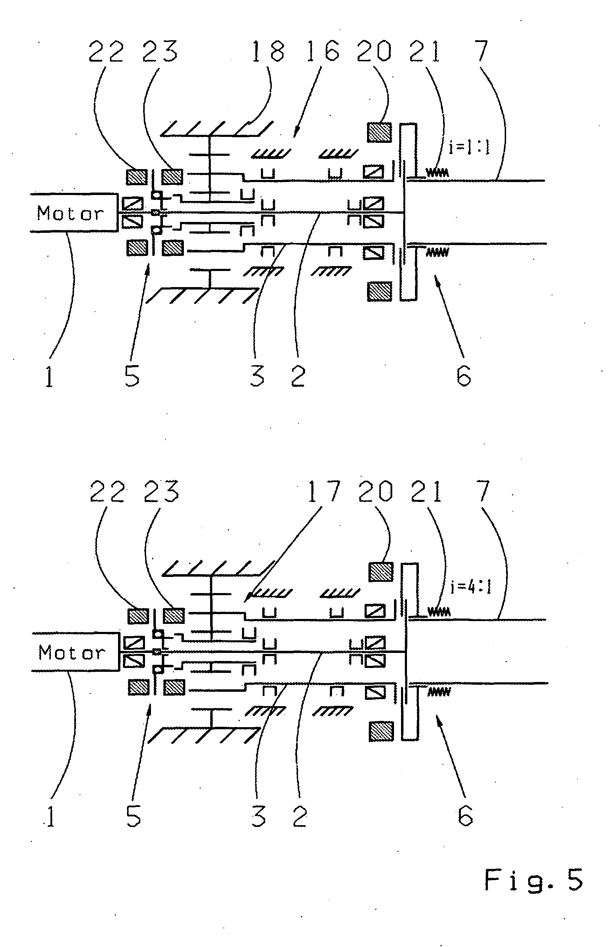

Bei dem in Figur 5 gezeigten Beispiel umfasst das Schaltelement 5 zwei Spulen 22, 23 und ist durch entsprechende Betätigung der Spulen in die gewünschte Richtung betätigbar; das Schaltelement 6 umfasst eine Spule 20 und eine Feder 21, so dass es durch die Betätigung der Spule gegen die Federkraft betätigt werden kann.

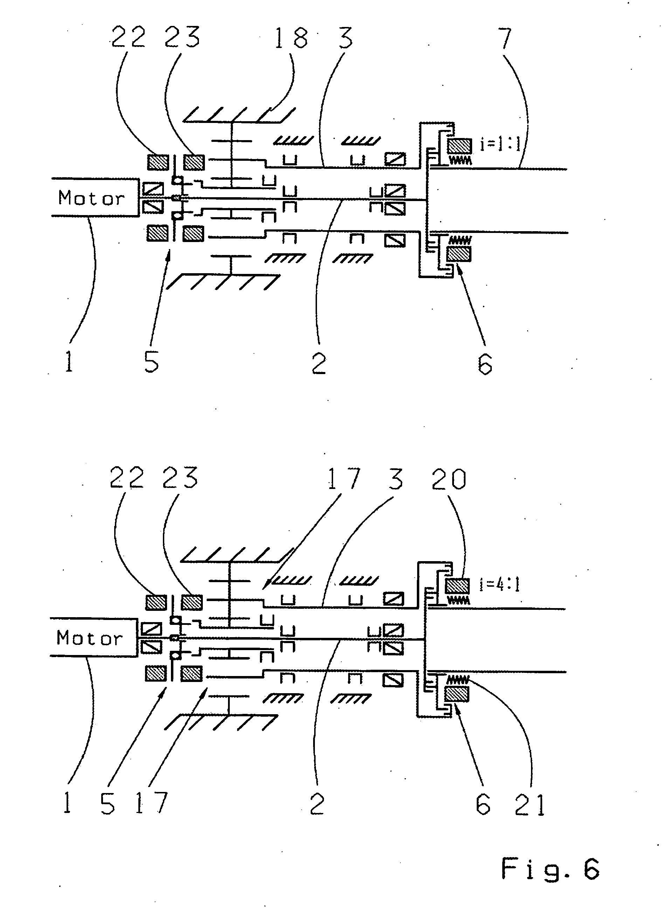

Bei dem in Figur 6 gezeigten Beispiel umfasst das Schaltelement 5 ebenfalls zwei Spulen 22, 23 und ist durch entsprechende Betätigung der Spulen in die gewünschte Richtung betätigbar; das Schaltelement 6 umfasst eine Spule 20 und eine Feder 21, die an der gleichen Seite des Schaltelementes angeordnet sind, so dass es durch die Betätigung der Spule gegen die Federkraft betätigt werden kann.

Zur normalen Adaption mit Spindel motoren ist auch eine integrierte Lösung möglich. Die innenliegende Abtriebswelle 2 kann hierbei als Teil des Läufers vorliegen, um somit in vorteilhafter Weise die Baulänge zu verkürzen.

### Bezugszeichen

- 1: Antriebswelle, Motorwelle
- 2: erste Abtriebswelle
- 3: zweite Abtriebswelle
- 4: Sonnenrad
- 5: erstes Schaltelement
- 6: zweites Schaltelement
- 7: Spindel, Spindeleinsatz
- 8: Hohlrad
- 9: Radialwellendichtring
- 10: Radialwellendichtring
- 11: Dichtstelle
- 12: Spindellager
- 13: Spindellager
- 14: Lager
- 15: Lager
- 16: Werkzeugmaschinengetriebe
- 17: Planetensatz
- 18: Gehäuse
- 19: Steg
- 20: Spule
- 21: Feder
- 22: Spule
- 23: Spule

## Patentansprüche

1. Zweistufige Werkzeugmaschinengetriebeanordnung, insbesondere für ein Spindelgetriebe, umfassend eine Antriebswelle (1), einen Planetensatz (17) und eine Spindel (7) bei dem die Spindel (7) bzw. ein Spindeleinsatz mit dem Abtrieb des Getriebes form- oder kraftschlüssig verbindbar ist, **dadurch gekennzeichnet, dass** es eine erste Abtriebswelle (2) und eine zweite Abtriebswelle (3) aufweist, wobei die erste Abtriebswelle (2) drehfest mit der Antriebswelle (1) verbunden ist und mit dem Sonnenrad (4) des Planetensatzes (17) über ein erstes Schaltelement (5) lösbar verbindbar ist, wobei die zweite Abtriebswelle (3) mit dem Steg (19) des Planetensatzes (17) drehfest verbunden ist und das Hohlrad (8) des Planetensatzes (17) drehfest mit dem Gehäuse (18) des Getriebes verbunden ist, und wobei ein zweites Schaltelement (6) vorgesehen ist, das eine lösbare Verbindung zwischen der Spindel (7) bzw. einem Spindeleinsatz und wahlweise der ersten oder der zweiten Abtriebswelle (2) bzw. (3) herstellt.

2. Zweistufige Werkzeugmaschinengetriebeanordnung nach Anspruch 1, **dadurch gekennzeichnet, dass** die Spindel (7) koaxial zur ersten Abtriebswelle (2) angeordnet ist, und dass die zweite Abtriebswelle (3) als koaxial zur ersten Abtriebswelle (2) ausgeführte Hohlwelle ausgebildet ist, wobei die erste Abtriebswelle (2) über Spindellager (12, 13) spielfrei in der zweiten Abtriebswelle (3) gelagert ist.

3. Zweistufige Werkzeugmaschinengetriebeanordnung nach Anspruch 1 oder 2, **dadurch gekennzeichnet, dass** der Direktgang (zweite Gangstufe) durch die Verbindung der ersten Abtriebswelle (2) mit der Spindel (7) bzw. einem Spindeleinsatz über das zweite Schaltelement (6) bei geöffnetem ersten Schaltelement (5) erzeugt wird, wobei der eine Übersetzung aufweisende Gang (erste Gangstufe) durch Verbinden der Spindel (7) bzw. eines Spindeleinsatzes mit der zweiten Abtriebswelle (3) über das zweite Schaltelement (6) bei geschlossenem ersten Schaltelement (5) realisiert wird.

4. Zweistufige Werkzeugmaschinengetriebeanordnung nach einem der vorangehenden Ansprüche, **dadurch gekennzeichnet, dass** eine Sperrvorrichtung vorgesehen ist, welche das Mitdrehen der zweiten Abtriebswelle (3) im Direktgang verhindert.

5. Zweistufige Werkzeugmaschinengetriebeanordnung nach Anspruch 4, **dadurch gekennzeichnet, dass** die Sperrvorrichtung als Federstift ausgebildet ist, der in eine Bohrung des Planetenträgers führbar ist, wodurch der Planetenträger blockiert wird, wobei die Betätigung des Federstiftes über Betätigung der ersten Kupplung (5) oder der zweiten Kupplung (6) erfolgt.

6. Zweistufige Werkzeugmaschinengetriebeanordnung nach einem der vorangehenden Ansprüche, **dadurch gekennzeichnet, dass** das erste Schaltelement (5) in das Getriebe (16) integriert ist, und dass das zweite Schaltelement (6) abtriebsseitig außerhalb des Getriebes (16) angeordnet ist.

7. Zweistufige Werkzeugmaschinengetriebeanordnung nach einem der vorangehenden Ansprüche, **dadurch gekennzeichnet, dass** die Spindel bzw. ein Spindeleinsatz (7) als Träger für das zweite Schaltelement (6) dient.

8. Zweistufige Werkzeugmaschinengetriebeanordnung nach einem der vorangehenden Ansprüche, **dadurch gekennzeichnet, dass** es eine Drehdurchführung aufweist, die als Übergabeeinrichtung für Kühlflüssigkeiten, Öle oder Luft zwischen Getriebeabtrieb und Spindel (7) dient.

9. Zweistufige Werkzeugmaschinengetriebeanordnung nach Anspruch 8, **dadurch gekennzeichnet, dass** die Drehdurchführung in der ersten Abtriebswelle (2) gelagert ist und zwei Dichtscheiben umfasst, welche als Dichtstelle und als Einrichtung zur Aufnahme von Differenzdrehzahlen dienen.

10. Zweistufige Werkzeugmaschinengetriebeanordnung nach einem der vorangehenden Ansprüche, **dadurch gekennzeichnet, dass** die Schaltelemente (5, 6) als Klauen- oder Reibflächenkupplungen oder als Synchronisierungen ausgeführt sind und elektrisch, mechanisch, elektromechanisch, hydraulisch, pneumatisch und/oder mit Federkraft betätigbar sind.

## Claims

1. Two-stage machine tool gear arrangement, in particular for a spindle gear, comprising a drive shaft (1), a planet set (17) and a spindle (7), in which the spindle (7) or a spindle insert is connectable positively or non-positively to the output of the gear, **characterized in that** it has a first output shaft (2) and a second output shaft (3), the first output shaft (2) being connected fixedly in rotation to the drive shaft (1) and being connectable releasably to the sun wheel (4) of the planet set (17) via a first shift element (5), the second output shaft (3) being connected fixedly in rotation to the bridge (19) of the planet set (17), and the ring wheel (8) of the planet set (17) being connected fixedly in rotation to the casing (18) of the gear, and a second shift element (6) being provided which makes a releasable connection between the spindle (7) or a spindle insert and, selectively, the first or the second output shaft (2) or (3).

2. Two-stage machine tool gear arrangement according to Claim 1, **characterized in that** the spindle (7) is arranged coaxially to the first output shaft (2), and **in that** the second output shaft (3) is designed as a hollow shaft formed coaxially to the first output shaft (2), the first output shaft (2) being mounted, free of play, in the second output shaft (3) via spindle bearings (12, 13).

3. Two-stage machine tool gear arrangement according to Claim 1 or 2, **characterized in that** direct speed (second speed stage) is produced by means of the connection of the first output shaft (2) to the spindle (7) or to a spindle insert via the second shift element (6), with the first shift element (5) open, the speed which has a step-up (first speed stage) being implemented by means of the connection of the spindle (7) or of a spindle insert to the second output shaft (3) via the second shift element (6), with the first shift element (5) closed.

4. Two-stage machine tool gear arrangement according to one of the preceding claims, **characterized in that** a blocking device is provided which prevents the corotation of the second output shaft (3) in direct speed.

5. Two-stage machine tool gear arrangement according to Claim 4, **characterized in that** the blocking device is designed as a spring pin which can be guided into a bore of the planet carrier, with the result that the planet carrier is blocked, the actuation of the spring pin taking place via the actuation of the first clutch (5) or of the second clutch (6).

6. Two-stage machine tool gear arrangement according to one of the preceding claims, **characterized in that** the first shift element (5) is integrated into the gear (16), and **in that** the second shift element (6) is arranged outside the gear (16) on the output side.

7. Two-stage machine tool gear arrangement according to one of the preceding claims, **characterized in that** the spindle or a spindle insert (7) serves as a carrier for the second shift element (6).

8. Two-stage machine tool gear arrangement according to one of the preceding claims, **characterized in that** it has a rotary leadthrough which serves as a transfer device for cooling liquids, oils or air between the gear output and spindle (7).

9. Two-stage machine tool gear arrangement according to Claim 8, **characterized in that** the rotary leadthrough is mounted in the first output shaft (2) and comprises two sealing washers which serve as a sealing point and as a device for the absorption of differential rotational speeds.

10. Two-stage machine tool gear arrangement according to one of the preceding claims, **characterized in that** the shift elements (5, 6) are designed as dog or friction-surface clutches or as synchronizations and can be actuated electrically, mechanically, electromechanically, hydraulically, pneumatically and/or by spring force.

## Revendications

1. Agencement de transmission à deux étages pour une machine-outil, en particulier pour une transmission à broche, comprenant un arbre d'entraînement (1), un train planétaire (17) et une broche (7), la broche (7) ou un insert de broche pouvant être connecté(e) à la sortie de la transmission par engagement par correspondance géométrique ou par force, **caractérisé en ce qu'**il présente un premier arbre de sortie (2) et un deuxième arbre de sortie (3), le premier arbre de sortie (2) étant connecté de manière solidaire en rotation au premier arbre de sortie (1) et pouvant être connecté de manière desserrable à la roue solaire (4) du train planétaire (17) par le biais d'un premier élément de commutation (5), le deuxième arbre de sortie (3) étant connecté de manière solidaire en rotation à la tige (19) du train planétaire (17) et la couronne (8) du train planétaire (17) étant connectée de manière solidaire en rotation au boîtier (18) de la transmission, et un deuxième élément de commutation (6) étant prévu, lequel établit une connexion desserrable entre la broche (7) ou un insert de broche et au choix le premier ou le deuxième arbre de sortie (2) ou (3).

2. Agencement de transmission à deux étages pour une machine-outil selon la revendication 1, **caractérisé en ce que** la broche (7) est disposée coaxialement par rapport au premier arbre de sortie (2) et **en ce que** le deuxième arbre de sortie (3) est réalisé sous forme d'arbre creux réalisé coaxialement par rapport au premier arbre de sortie (2), le premier arbre de sortie (2) étant monté par le biais de paliers de broche (12, 13) sans jeu dans le deuxième arbre de sortie (3).

3. Agencement de transmission à deux étages pour une machine-outil selon la revendication 1 ou 2, **caractérisé en ce que** le rapport direct (deuxième rapport de vitesse) est produit par la connexion du premier arbre de sortie (2) à la broche (7) ou un insert de broche par le biais du deuxième élément de commutation (6) lorsque le premier élément de commutation (5) est ouvert, le rapport présentant une multiplication (premier rapport de vitesse) étant réalisé en connectant la broche (7) ou un insert de broche au deuxième arbre de sortie (3) par le biais du deuxième élément de commutation (6) lorsque le premier élément de commutation (5) est fermé.

4. Agencement de transmission à deux étages pour une machine-outil selon l'une quelconque des revendications précédentes, **caractérisé en ce que** l'on prévoit un dispositif de blocage qui empêche l'entraînement en rotation du deuxième arbre de sortie (3) dans le rapport direct.

5. Agencement de transmission à deux étages pour une machine-outil selon la revendication 4, **caractérisé en ce que** le dispositif de blocage est réalisé sous forme de goupille à ressort qui peut être guidée dans un alésage du porte-satellites, de sorte que le porte-satellites soit bloqué, l'actionnement de la goupille à ressort s'effectuant par le biais d'un actionnement du premier embrayage (5) ou du deuxième embrayage (6).

6. Agencement de transmission à deux étages pour une machine-outil selon l'une quelconque des revendications précédentes, **caractérisé en ce que** le premier élément de commutation (5) est intégré dans la transmission (16), et **en ce que** le deuxième élément de commutation (6) est disposé du côté de la sortie en dehors de la transmission (16).

7. Agencement de transmission à deux étages pour une machine-outil selon l'une quelconque des revendications précédentes, **caractérisé en ce que** la broche ou un insert de broche (7) sert de support pour le deuxième élément de commutation (6).

8. Agencement de transmission à deux étages pour une machine-outil selon l'une quelconque des revendications précédentes, **caractérisé en ce qu'**il présente un passage rotatif, qui sert de dispositif de transfert pour des liquides de refroidissement, des huiles ou de l'air entre la sortie de la transmission et la broche (7).

9. Agencement de transmission à deux étages pour une machine-outil selon la revendication 8, **caractérisé en ce que** le passage rotatif est monté dans le premier arbre de sortie (2) et comprend deux disques d'étanchéité, qui servent de point d'étanchéité et de dispositif pour recevoir des régimes différentiels.

10. Agencement de transmission à deux étages pour une machine-outil selon l'une quelconque des revendications précédentes, **caractérisé en ce que** les éléments de commutation (5, 6) sont réalisés sous forme d'embrayage à griffe ou à surfaces de friction ou sous forme de synchronisations, et peuvent être actionnés de manière électrique, mécanique, électromécanique, hydraulique, pneumatique et/ou par une force de ressort.
